# EUROPÄISCHE PATENTSCHRIFT

(11) **EP 1 378 189 B1**
(45) Veröffentlichungstag und Bekanntmachung des Hinweises auf die Patenterteilung: **19.10.2005**
(21) Anmeldenummer: 03014716.9
(22) Anmeldetag: 27.06.2003
(51) Int. Cl.: A47C 1/032, A47C 20/04

(54) **Elektromotorischer Möbelantrieb**
Electric motor drive system for furniture
Mecanisme d'entrainement a moteur electrique pour meubles

(30) Priorität: 01.07.2002 DE 20210187 U
(43) Veröffentlichungstag der Anmeldung: 07.01.2004
(73) Patentinhaber: Dewert Antriebs- und Systemtechnik GmbH, 32278 Kirchlengern (DE)
(72) Erfinder: Roither, Andreas, 32130 Enger (DE)
(74) Vertreter: Specht, Peter

(56) Entgegenhaltungen:
- DE-U- 29 904 356
- US-A- 4 635 492
- US-B1- 6 377 010

## Beschreibung

Die Erfindung betrifft einen elektromotorischen Möbelantrieb mit einem Antriebsmotor oder mit zwei Antriebsmotoren, die mit die Motordrehzahlen herabsetzenden Getrieben gekoppelt sind und mit zwei Spindeln, von denen Bewegungen von an einem Möbel festgesetzten Stellgliedern ableitbar sind.

Ein elektromotorischer Möbelantrieb ist aus z.B. Dokument DE-U-29904356 zu entnehmen.

Der in Rede stehende elektromotorische Möbelantrieb wird in der einschlägigen Branche als Doppelantrieb bezeichnet. In einer ersten Ausführung ist er so ausgelegt, daß die Spindeln fluchtend zueinander stehen. Die Spindeln sind rotierend antreibbar, so daß darauf aufgesetzte, gegen Drehung gesicherte Spindelmuttern in Längsrichtung der Spindeln verfahren werden. Die Spindelmuttern drücken bei Bewegungen in Richtung zu den Spindelenden gegen Stellglieder, die auch als Anlenkhebel bezeichnet werden, die auf die Wellen des Kopf- und des Fußteiles eines Lattenrostes drehfest aufgesetzt sind.

Durch die Linearbewegungen der Spindelmuttern werden die Stellglieder geschwenkt, wodurch das Kopf- und das Fußteil aufgerichtet werden. Die Schwenkwinkel der Stellglieder richten sich nach den Verstellbereichen des Kopf- und des Fußteiles. Daraus ergeben sich die Strecken, über die die Spindelmuttern verfahren werden müssen. Außerdem sind die Spindeln so angeordnet, daß die durch den Abstand der Wellen des Kopf- und des Fußteiles vorgegebenen Positionen der Stellglieder zu einem Verschwenken führen. Das Absenken des Kopf- und des Fußteiles erfolgt zwar bei angetriebener Spindel, jedoch durch das Eigengewicht der Möbelbauteile.

Durch die relativ geringe Geschwindigkeit jeder Spindelmutter ist die Absenkgeschwindigkeit entsprechend gering, da ein schlagartiges Absenken im Normalbetrieb vermieden werden soll. Derartige elektromotorische Möbelantriebe haben sich in der Praxis bestens bewährt. Im Möbelbereich gibt es Einsatzfälle, bei denen der Einsatz von Doppelantrieben gewünscht bzw. notwendig ist, bei denen jedoch der Abstand zwischen den beiden Stellgliedern deutlich geringer ist als bei den Doppelantrieben für Lattenroste.

Da auch relativ große Schwenkwinkel der Stellglieder erforderlich sind, ist vorgeschlagen worden, daß die Spindeln im Abstand sowie übereinander stehen. Das sonstige Antriebsprinzip wird jedoch beibehalten, d. h., die Spindeln werden rotierend angetrieben und darauf verfahren die Spindelmuttern. Durch eine derartige Auslegung des Möbelantriebes ist es zwar möglich, die Abstände der beiden Stellglieder gegenüber den Möbelantrieben für Lattenroste zu reduzieren, das Gesamtvolumen ändert sich, wenn überhaupt, nur unwesentlich. Für die letztgenannte Ausführung ist demzufolge noch ein relativ großer Einbauraum notwendig. Die letztgenannte Ausführung ist besonders für die Erstellung der beweglichen Bauteile von Sesseln geeignet.

Ausgehend von einem elektromotorischen Möbelantrieb der letztgenannten Bauart liegt der Erfindung die Aufgabe zugrunde, diesen so zu gestalten, daß das Volumen und somit der Einbauraum reduziert wird und daß die Anzahl der benötigten Bauteile verringert wird, so daß insgesamt der Möbelantrieb kostengünstiger hergestellt werden kann.

Die gestellte Aufgabe wird gelöst, indem zumindest eine der Spindeln als Hohlspindel ausgebildet ist und daß die andere Spindel wenigstens mit einem Teil ihrer Länge innerhalb der Hohlspindel einbringbar ist und daß die gegen Drehung gesicherten Spindeln mittels wenigstens einem die Motordrehzahl herabsetzenden Getriebe in ihren Längsrichtungen verfahrbar sind.

Da nunmehr wenigstens eine Hohlspindel verwendet wird, ist es möglich, daß in den Hohlraum dieser Spindel die zweite Spindel einfahrbar ist. Dadurch wird der für die Spindeln benötigte Raum so klein wie möglich gehalten, so daß insgesamt der elektromotorische Möbelantrieb von den Abmessungen äußerst kompakt ist. Dadurch läßt er sich vielfältig einsetzen.

Die zweite Spindel kann auch eine Hohlspindel sein, obwohl eine massive Spindel den Vorteil bietet, daß der Durchmesser gering ist. Der Möbelantrieb ist so ausgelegt, daß sich die Spindeln bei eingeschaltetem Antriebsmotor nicht drehen können. Sie sind jedoch antriebstechnisch mit den die Motordrehzahlen herabsetzenden Getrieben gekoppelt, so daß sie so bewegt werden können, daß das Stellglied zum Bewegen eines Möbelbauteils bewegt, vorzugsweise verschwenkt wird. Der elektromotorische Möbelantrieb ist mit einer Steuereinheit und einem Handschalter ausgestattet, die so ausgelegt sind, daß jeder Antriebsmotor einzeln angesteuert werden kann. Der erfindungsgemäße elektromotorische Möbelantrieb hat trotz der kompakten Bauweise einen relativ hohen Verstellweg. Ferner ist vorteilhaft, daß die Kräfte in axialer Richtung wirken. Dadurch kann bei einer relativ geringen Antriebsleistung ein Drehmoment zur Verstellung von Möbelbauteilen erzeugt werden.

In weiterer Ausgestaltung ist vorgesehen, daß die Lineargeschwindigkeiten der beiden Spindeln gleich oder annähernd gleich sind. Dies läßt sich auf vielfältige Weise erreichen. Wird ein Gewinde nach einer Norm verwendet, ist die Steigung des Außengewindes der Hohlspindel größer als das der inneren Spindel. In diesem Falle könnten gleiche Geschwindigkeiten der Spindeln durch unterschiedliche Drehzahlen erreicht werden. In weiterer Ausgestaltung ist jedoch vorgesehen, daß die Steigungen der Spindeln gleich sind. In bevorzugter Ausführung ist vorgesehen, daß jedes die Motordrehzahl herabsetzende Getriebe ein Schneckentrieb ist, wobei die Schnecke auf den Abtriebszapfen des Antriebsmotors drehfest aufgesetzt oder der Abtriebszapfen des Antriebsmotors als Schnecke ausgebildet ist und daß das damit in Eingriff stehende Schneckenrad eine mit der zugehörigen Spindel in Eingriff stehende, zentrische Innengewindebohrung aufweist. Durch die Verwendung von Schneckentrieben werden hohe Drehzahlverhältnisse zwischen den Abtriebszapfen der Antriebsmotore und den Spindeln erreicht. Außerdem könnte der Möbelantrieb selbsthemmend sein.

Die Längen der Spindeln richten sich danach, welche Verstellwege benötigt werden. Es ist jedoch in bevorzugter Ausführung vorgesehen, daß die Längen der Spindeln übereinstimmen oder annähernd übereinstimmen. Bei einem Verstellen der Möbelbauteile müßte jede Spindel eine Druckkraft aufbringen, da jedes freie Ende der Spindel mit einem Hebel, einem Schieber oder dergleichen zusammenwirkt. Die Rückstellbewegung des Möbelbauteils erfolgt üblicherweise durch das Eigengewicht, jedoch bei eingeschaltetem Antrieb, so daß auch die Absenkgeschwindigkeit nicht größer oder nicht wesentlich größer ist als die Geschwindigkeit bei der Aufwärtsbewegung.

Damit die Spindeln nicht in den Endbereichen gestaucht werden und daß auch über den Verstellweg Kontakt mit dem Schwenkhebel gehalten wird, ist vorgesehen, daß auf die freien aneinander abgewandten Stirnendbereiche der Spindeln Endstücke aufgesetzt sind, die mit dem Stellelement zusammenwirken, vorzugsweise durch Kontakt zusammenwirken. Die Endstücke könnten auch als Schieber bezeichnet werden, wobei zur Aufrechterhaltung des Kontaktes jede äußere Kante bzw. die äußeren Kanten der Endstücke gegenüber den Spindeln vorstehen.

Bei der Schwenkbewegung gleitet der Schwenkhebel bzw. der Anlenkhebel auf der äußeren freien Fläche jedes Endstückes. Damit es nicht zu einer Beschädigung des Außengewindes der inneren Spindel kommt, ist vorgesehen, daß der Außendurchmesser der in die Hohlspindel einfahrbaren Spindel geringer ist als der Innendurchmesser der Hohlspindel. Dadurch wird zwischen dem Außendurchmesser bzw. dem Außengewinde der inneren Spindel und der Innenfläche der Hohlspindel ein Ringspalt gebildet.

In einer weiteren Ausführungsform ist vorgesehen, dass die Getriebe durch einen gemeinsamen Antriebsmotor antreibbar sind. Dadurch wird eine kostengünstige Lösung erreicht. Damit wahlweise eine der beiden Spindeln oder auch beide Spindeln gemeinsam angetrieben werden können, ist dann in weiterer Ausgestaltung vorgesehen, dass der einzige Antriebsmotor mit den Getrieben über eine schaltbare Kupplung antriebstechnisch verbunden ist. Dabei kann je nach den Verhältnissen jede Schaltbare Kupplung innerhalb eines Antriebszuges montiert sein.

Damit die Spindeln nicht außer Eingriff mit den Schneckenrädern kommen oder damit keine Bauteile beschädigt werden, ist vorgesehen, dass jeder Spindel wenigstens zwei die beiden Endstellungen vorgebende Endschalter zugeordnet sind. Je nach Einsatzzweck des erfindungsgemäßen elektromotorischen Möbelantriebes kann es auch erforderlich sein, dass jeder Spindel wenigstens drei Endschalter derart zugeordnet sind, dass die jeweilige Spindel in mindestens eine Zwischenstellung verfahrbar ist. Bevorzugt ist wenigsten eine der Spindeln im Spritzgußverfahren ausgebildet bzw. hergestellt.

Anhand der beiliegenden Zeichnung wird die Erfindung noch näher erläutert. Es zeigt:

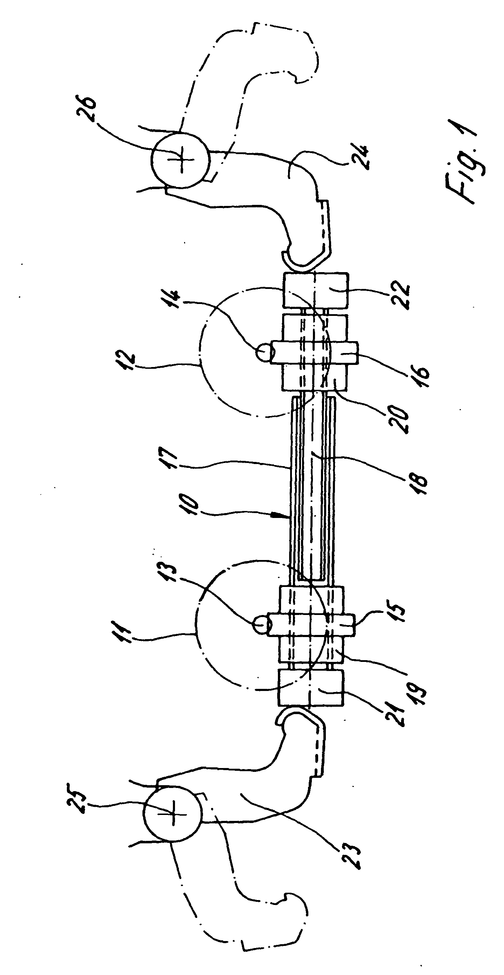

- Figur 1: den erfindungsgemäßen elektromotorischen Möbelantrieb im Aufriß, rein schematisch

Der in der Figur 1 dargestellte, ein erstes Ausführungsbeispiel bildende elektromotorische Möbelantrieb ist ein Doppelantrieb und enthält zwei Antriebsmotore 11, 12 deren Drehachsen parallel und im Abstand zueinander liegen. Auf die Abtriebszapfen sind in nicht näher dargestellter Weise Schnecken 13, 14 drehfest aufgesetzt oder die Abtriebszapfen sind als Schnecken ausgebildet. Jede Schnecke 13, 14 steht mit einem Schneckenrad 15, 16 in Eingriff. Die Drehachsen der Schneckenräder 15, 16 stehen quer und im Abstand zu den Schnecken 13, 14. Jedes Schneckenrad 15, 16 ist mit einer zentrischen Innengewindebohrung ausgestattet.

Das Innengewinde des Schneckenrades 15 steht mit einer Hohlspindel 17 und das Innengewinde des Schneckenrades 16 steht mit einer weiteren Spindel 18 in Eingriff. In der Figur 1 ist der zusammengefahrene Zustand der Hohlspindel 17 und der Spindel 18 dargestellt. In dieser Stellung steht das freie Ende der in die Hohlspindel 17 einfahrbaren Spindel 18 in einem geringen Abstand zum Schneckenrad 15, welches mit der Hohlspindel 17 in Eingriff steht. Das freie Ende der Hohlspindel 17 steht im zusammengefahrenen Zustand in einem geringen Abstand zu dem mit der Spindel 18 in Eingriff stehenden Schneckenrad 16. Die Spindel 18 ist massiv, könnte jedoch auch eine Hohlspindel sein. Der Außendurchmesser der Spindel 18 ist ein klein wenig geringer als der Innendurchmesser der Hohlspindel 17, so daß zum Schutz des Außengewindes der Spindel 18 ein Ringspalt gebildet wird.

Die Spindeln 17, 18 sind gegen Drehung gesichert und fliegend gelagert, d. h., durch feste, den Schneckenrädern 15, 16 zugeordnete Lagerklötze 19, 20. Auf die einander abgewandten, freien Enden der Hohlspindel 17 und der Spindel 18 sind Endstücke 21, 22 drehfest aufgesetzt. Die einander abgewandten, freien Flächen der Endstücke 21, 22 wirken mit Schwenkhebeln bzw. Anlenkhebeln 23, 24 zusammen, die um ortsfeste Achsen 25, 26 schwenkbar sind. Die Schwenkhebel 23, 24 sind in nicht näher dargestellter Weise drehfest auf die Achsen 25, 26 aufgesetzt, so daß sie sich bei einer Linearbewegung der Hohlspindel 17 oder der Spindel 18 verdrehen.

Der Abstand zwischen den beiden festen Achsen 25, 26 ist deutlich geringer als der Abstand der beiden Wellen eines Lattenrostes in der Normalausführung.

Wie die Figur 1 zeigt, wird ein relativ großer Schwenkwinkel für jeden Schwenkhebel 23, 24 erreicht, bedingt durch den relativ großen Überlappungsbereich der beiden Spindeln 17, 18. Die Rückstellbewegungen der nicht dargestellten Möbelbauteile erfolgt durch das Eigengewicht, jedoch bei eingeschalteten Antriebsmotoren 11, 12, so daß auch die Absenkgeschwindigkeit gering ist. Die beiden Antriebsmotore 11, 12 können an der gleichen Seite, bezogen auf die Mittellängsachsen der Spindeln 17, 18 oder auch an gegenüberliegenden Seiten montiert werden. Die Antriebsmotore 11, 12 sind Gleichstrommotore, die mit einer Sicherheitsgleichspannung betrieben werden.

## Patentansprüche

1. Elektromotorischer Möbelantrieb mit einem Antriebsmotor oder mit zwei Antriebsmotoren, die mit die Motordrehzahlen herabsetzenden Getrieben gekoppelt sind und mit zwei Spindeln, von denen Bewegungen von an Möbelbauteilen festgesetzten Stellgliedern ableitbar sind, **dadurch gekennzeichnet, dass** zumindest eine der Spindeln als Hohlspindel (17) ausgebildet ist und daß die andere Spindel (18) wenigstens mit einem Teil ihrer Länge innerhalb der Hohlspindel (17) einbringbar ist und daß die gegen Drehung gesicherten Spindeln (17, 18) mittels wenigstens einem die Motordrehzahl herabsetzenden Getriebe (13 bis 16) in ihren Längsrichtungen verfahrbar sind.

2. Elektromotorischer Möbelantrieb nach Anspruch 1, **dadurch gekennzeichnet, dass** die Lineargeschwindigkeiten der Hohlspindel (17) und der Spindel (18) gleich oder annähernd gleich sind.

3. Elektromotorischer Möbelantrieb nach Anspruch 1 oder 2, **dadurch gekennzeichnet, dass** jedes die Motordrehzahl herabsetzende Getriebe ein Schneckentrieb (13, 15 bzw. 14, 16) ist, wobei die Schnecke (13, 14) auf den Abtriebszapfen des Antriebsmotors (11, 12) drehfest aufgesetzt oder der Abtriebszapfen des Antriebsmotors (11, 12) als Schnecke ausgebildet ist und daß das Schneckenrad (15, 16) eine mit der zugehörigen Spindel (17, 18) in Eingriff stehende zentrische Innengewindebohrung aufweist.

4. Elektromotorischer Möbelantrieb nach einem oder mehreren der vorhergehenden Ansprüche 1 bis 3, **dadurch gekennzeichnet, dass** die Hohlspindel (17) und die Spindel (18) mit Außengewinden mit vorzugsweise gleichen Steigungen ausgestattet sind.

5. Elektromotorischer Möbelantrieb nach einem oder mehreren der vorhergehenden Ansprüche 1 bis 4, **dadurch gekennzeichnet, dass** die Längen der Spindeln (17, 18) gleich oder annähernd gleich sind.

6. Elektromotorischer Möbelantrieb nach einem oder mehreren der vorhergehenden Ansprüche 1 bis 5, **dadurch gekennzeichnet, dass** auf die freien, einander abgewandten Stirnendbereiche der Spindeln (17, 18) Endstücke (21, 22) drehfest aufgesetzt sind, die mit Stellelementen oder Schwenkhebeln (23, 24) zusammenwirken.

7. Elektromotorischer Möbelantrieb nach Anspruch 6, **dadurch gekennzeichnet, dass** die Endstücke (21, 22) klotzartig oder scheibenförmig gestaltet sind und daß die äußere Kante bzw. die äußeren Kanten gegenüber den Spindeln (17, 18) vorstehen.

8. Elektromotorischer Möbelantrieb nach einem oder mehreren der vorhergehenden Ansprüche 1 bis 7, **dadurch gekennzeichnet, dass** der Außendurchmesser der in die Hohlspindel (17) einfahrbaren Spindel (18) geringer ist als der Innendurchmesser der Hohlspindel (17).

9. Elektromotorischer Möbelantrieb nach einem oder mehreren der vorhergehenden Ansprüche 1 bis 8, **dadurch gekennzeichnet, dass** die Getriebe(13-16) durch einen gemeinsamen Antriebsmotor antreibbar sind.

10. Elektromotorischer Möbelantrieb nach Anspruch 9, **dadurch gekennzeichnet, dass** der Antriebsmotor mit den Getrieben über schaltbare Kupplungen antriebstechnisch verbunden ist.

11. Elektromotorischer Möbelantrieb nach Anspruch 10, **dadurch gekennzeichnet, dass** jede schaltbare Kupplung innerhalb eines Antriebszuges montiert ist.

12. Elektromotorischer Möbelantrieb nach einem oder mehreren der vorhergehenden Ansprüche 1 bis 11, **dadurch gekennzeichnet, dass** jeder Spindel (17, 18) wenigstens zwei deren Endstellungen vorgebende Endschalter zugeordnet sind.

13. Elektromotorischer Möbelantrieb nach Anspruch 12, **dadurch gekennzeichnet, dass** jeder Spindel (17, 18) wenigstens drei Endschalter derart zugeordnet sind, dass die jeweilige Spindel (17 bzw. 18) in mindestens eine Zwischenstellung verfahrbar ist.

14. Elektromotorischer Möbelantrieb nach einem der vorhergehenden Ansrpüche, **dadurch gekennzeichnet, daß** daß wenigstens eine der Spindeln als Spritzgußteil ausgebildet ist.

## Claims

1. Electric-motor furniture drive having a drive motor or having two drive motors which are coupled to gear mechanisms which reduce the motor speeds, and having two spindles which can be used to derive movements of actuators fixed to furniture components, **characterized in that** at least one of the spindles is in the form of a hollow spindle (17), and **in that** at least part of the length of the other spindle (18) can be moved into the hollow spindle (17), and **in that** the spindles (17, 18), which are secured against rotation, can be moved in their longitudinal directions by means of at least one gear mechanism (13 to 16) which reduces the speed of the motor.

2. Electric-motor furniture drive according to Claim 1, **characterized in that** the linear speeds of the hollow spindle (17) and of the spindle (18) are equal or approximately equal.

3. Electric-motor drive according to Claim 1 or 2, **characterized in that** each gear mechanism which reduces the speed of the motor is a worm drive (13, 15 or 14, 16), wherein the worm (13, 14) is fitted on the output journal of the drive motor (11, 12) so as to rotate with it, or the output journal of the drive motor (11, 12) is in the form of a worm, and **in that** the worm gear (15, 16) has a centred internal threaded hole which is in engagement with the associated spindle (17, 18).

4. Electric-motor furniture drive according to one or more of the preceding Claims 1 to 3, **characterized in that** the hollow spindle (17) and the spindle (18) are equipped with external threads having preferably the same pitch.

5. Electric-motor furniture drive according to one or more of the preceding Claims 1 to 4, **characterized in that** the lengths of the spindles (17, 18) are equal or approximately equal.

6. Electric-motor furniture drive according to one or more of the preceding Claims 1 to 5, **characterized in that** end pieces (21, 22) which interact with actuating elements or pivoting levers (23, 24) are fitted on the mutually averted free end regions of the spindles (17, 18) so as to rotate with them.

7. Electric-motor furniture drive according to Claim 6, **characterized in that** the end pieces (21, 22) are in the form of blocks or discs, and **in that** the outer edge or the outer edges protrude with respect to the spindles (17, 18).

8. Electric-motor furniture drive according to one or more of the preceding Claims 1 to 7, **characterized in that** the outside diameter of the spindle (18) which can be moved into the hollow spindle (17) is smaller than the inside diameter of the hollow spindle (17).

9. Electric-motor furniture drive according to one or more of the preceding Claims 1 to 8, **characterized in that** the gear mechanisms (13-16) can be driven by a common drive motor.

10. Electric-motor furniture drive according to Claim 9, **characterized in that** the drive motor is drive-connected to the gear mechanisms by means of switchable clutches.

11. Electric-motor furniture drive according to Claim 10, **characterized in that** each switchable clutch is installed within a drive train.

12. Electric-motor furniture drive according to one or more of the preceding Claims 1 to 11, **characterized in that** each spindle (17, 18) has at least two associated limit switches which specify their end positions.

13. Electric-motor furniture drive according to Claim 12, **characterized in that** each spindle (17, 18) has at least three associated limit switches such that the respective spindle (17 or 18) can be moved into at least one intermediate position.

14. Electric-motor furniture drive according to one of the preceding claims, **characterized in that** at least one of the spindles is in the form of an injection-moulded part.

## Revendications

1. Entraînement de meuble par moteur électrique, avec un moteur électrique ou avec deux moteurs électriques, qui sont accouplés avec des mécanismes de transmission diminuant les vitesses de rotation du moteur et avec deux arbres, dont les mouvements peuvent être transmis à des actionneurs fixés sur des éléments de meuble, **caractérisé en ce qu'**au moins l'un des arbres est conçu sous la forme d'un arbre creux (17) et **en ce que** l'autre arbre (18) est insérable par au moins une partie de sa longueur dans l'arbre creux (17) et **en ce que** les arbres (17, 18) garantis contre la rotation sont déplaçables dans leurs directions longitudinales par au moins un entraînement (13 à 16) diminuant la vitesse de rotation du moteur.

2. Entraînement de meuble par moteur électrique selon la revendication 1, **caractérisé en ce que** les vitesses linéaires de l'arbre creux (17) et de l'arbre (18) sont identiques ou approximativement identiques.

3. Entraînement de meuble par moteur électrique selon la revendication 1 ou 2, **caractérisé en ce que** chaque mécanisme de transmission diminuant la vitesse de rotation du moteur est un engrenage à vis sans fin (13, 15, resp. 14, 16), la vis sans fin (13, 14) étant placée de façon solidaire en rotation sur le tourillon de réduction du moteur d'entraînement (11, 12) ou **en ce que** le tourillon de réduction du moteur d'entraînement (11, 12) est conçu sous la forme d'une vis sans fin et **en ce que** la roue hélicoïdale (15, 16) comporte un taraudage central qui s'engrène avec l'arbre correspondant (17, 18).

4. Entraînement de meuble par moteur électrique selon l'une quelconque ou selon plusieurs des revendications précédentes 1 à 3, **caractérisé en ce que** l'arbre creux (17) et l'arbre (18) sont équipés de filetages avec de préférence des pas identiques.

5. Entraînement de meuble par moteur électrique selon l'une quelconque ou selon plusieurs des revendications précédentes 1 à 4, **caractérisé en ce que** les longueurs des arbres (17, 18) sont identiques ou approximativement identiques.

6. Entraînement de meuble par moteur électrique selon l'une quelconque ou selon plusieurs des revendications précédentes 1 à 5, **caractérisé en ce que** des embouts (21, 22) qui coopèrent avec des éléments de réglage ou avec des leviers pivotants (23, 24) sont placés de façon solidaire en rotation sur les zones frontales libres, opposées l'une à l'autre des arbres (17, 18).

7. Entraînement de meuble par moteur électrique selon la revendication 6, **caractérisé en ce que** les embouts (21, 22) sont conçus sous la forme de blocs ou de disques et **en ce que** le bord extérieur, resp. les bords extérieurs font saillie par rapport aux arbres (17, 18).

8. Entraînement de meuble par moteur électrique selon l'une quelconque ou selon plusieurs des revendications précédentes 1 à 7, **caractérisé en ce que** le diamètre extérieur de l'arbre (18) insérable dans l'arbre creux (17) est inférieur au diamètre intérieur de l'arbre creux (17).

9. Entraînement de meuble par moteur électrique selon l'une quelconque ou selon plusieurs des revendications précédentes 1 à 8, **caractérisé en ce que** les mécanismes d'entraînement (13 à 16) peuvent être entraînés par un moteur d'entraînement commun.

10. Entraînement de meuble par moteur électrique selon la revendication 9, **caractérisé en ce que** le moteur d'entraînement est relié par technique d'entraînement aux mécanismes de transmission par l'intermédiaire d'accouplements embrayables.

11. Entraînement de meuble par moteur électrique selon la revendication 10, **caractérisé en ce que** chaque accouplement embrayable est monté dans un tronçon d'entraînement.

12. Entraînement de meuble par moteur électrique selon l'une quelconque ou selon plusieurs des revendications précédentes 1 à 11, **caractérisé en ce qu'**au moins deux interrupteurs de fin de course prédéfinissant leurs positions finales sont associés à chaque arbre (17, 18).

13. Entraînement de meuble par moteur électrique selon la revendication 12, **caractérisé en ce qu'**au moins trois interrupteurs de fin de course sont associés à chaque arbre (17, 18) de façon à ce que l'arbre respectif (17, resp. 18) puisse être déplacé dans au moins une position intermédiaire.

14. Entraînement de meuble par moteur électrique selon l'une quelconque des revendications précédentes, **caractérisé en ce qu'**au moins l'un des arbres est conçu sous la forme d'une pièce moulée par injection.
